# EUROPEAN PATENT APPLICATION

(11) **EP 3 312 783 A1**
(43) Date of publication of application: **25.04.2018**
(21) Application number: 16202277.6
(22) Date of filing: 05.12.2016
(51) Int. Cl.: G06Q 10/06

(54) **MODEL VALIDATION SYSTEM AND METHOD**

(30) Priority: 18.10.2016 IN 201641035658
(71) Applicant: Mu Sigma Business Solutions Pvt. Ltd., 560066 Bengaluru (IN)
(72) Inventor: Kumar, Adarsh, 560017 Bangalore (IN); CP, Vishnuprasad, 560043 Bangalore PIN (IN); Varma, Rashmi, 400706 Navi Mumbai (IN)
(74) Representative: Ström & Gulliksson AB

(57) **Abstract**

A model validation system is provided. The model validation system includes a memory having computer-readable instructions stored therein and a processor. The processor is configured to enable a model validator to select a model for validation from an assigned set of models. Each model comprises a plurality of pre-defined attributes. The processor is further configured to assist interactions between a model developer and the model validator by defining a set of questions related to the selected model and identify a plurality of model risks for the selected model. The processor is further configured to design a validation work plan using a set of statistical tests. The validation work plan factors the identified model risks and the model validator selects the set of statistical tests from a plurality of statistical tests stored in a code repository. The processor is configured to execute the set of selected statistical tests for the validation work plan to generate a set of validation results of the selected model and categorize the plurality of model risks into one or more categories. The categorization is performed based on the set of validation results obtained during the validation of the selected model.

## Description

### Field

At least one example embodiment relates generally to a model validation and more particularly to a system and method which systematizes model validation and provides supervision of broad suite of models spread across the range of banking operations and identification of model risks per regulatory standards.

### BACKGROUND

Typically, for the smooth functioning of banks and other financial institutions under stress scenarios, safeguarding capital, liquidity, protecting consumer assets and ensuring capital adequacy, it is essential to identify potential risks. The potential risks can only be identified through rigorous model validation and continuous model monitoring. Today, due to increase in usage of quantitative models by banks, the model risk management has become more significant and challenging.

Post the 2008 financial crisis debacle, the regulatory bodies have steeply elevated the regulatory requirements for model validation. Moreover, the regulatory requirements are modified frequently with time and are hard to meet. As a result there are numerous difficulties a model validator faces to get a cross-sectional view of the model development as well as validation lifecycle.

The model validator needs to understand the model development, prepare validation workflow design, and generate validation report as per compliance standards. To bridge the gap between the model development and its validation, the model validator needs to understand the development of a particular model.

Therefore, an efficient model validation system and method is needed to ensure an easy flow of information between the model developer, the model validator and a validation supervisor.

### SUMMARY

The following summary is illustrative only and is not intended to be in any way limiting. In addition to the illustrative aspects, example embodiments, and features described above, further aspects, example embodiments, and features will become apparent by reference to the drawings and the following detailed description.

Example embodiments provide a model validation system that focuses on bringing a well-defined and efficient structure to the model validation. Briefly, according to an example embodiment, a model validation system is provided. The model validation system includes a memory having computer-readable instructions stored therein and a processor. The processor is configured to enable a model validator to select a model for validation from an assigned set of models. Each model comprises a plurality of pre-defined attributes. The processor is further configured to assist interactions between a model developer and the model validator by defining a set of questions related to the selected model. The processor is configured to identify a plurality of model risks for the selected model and design a validation work plan using a set of statistical tests. The validation work plan factors the identified model risks and the model validator selects the set of statistical tests from a plurality of statistical tests stored in a code repository. The processor is configured to execute the set of selected statistical tests for the validation work plan to generate a set of validation results of the selected model and categorize the plurality of model risks into one or more categories. The categorization is performed based on the set of validation results obtained during the validation of the selected model.

According to yet another example embodiment, a method for validating a model is provided. The method includes enabling a model validator to select the model for validation from an assigned set of models. Each model comprises a plurality of pre-defined attributes. The method also includes assisting interactions between a model developer and the model validator with a set of questions related to the selected model. In addition, the method includes identifying a plurality of model risks for the selected model and designing a validation work plan using a set of statistical tests. The validation work plan factors the identified model risks. The model validator selects the set of statistical tests from a plurality of statistical tests stored. Moreover, the method includes executing the set of selected statistical tests for the validation work plan to generate a set of validation results of the selected model. The method also includes categorizing the plurality of model risks into one or more categories. The categorization is performed based on the set of validation results obtained during the validation of the selected model.

### BRIEF DESCRIPTION OF THE FIGURES

These and other features, aspects, and advantages of the example embodiments will become better understood when the following detailed description is read with reference to the accompanying drawings in which like characters represent like parts throughout the drawings, wherein:
FIG. 1 is a block diagram of an embodiment of a computing device executing modules of a model validation system, according to an example embodiment;
FIG. 2 is a block diagram of the model validation system, according to an example embodiment;
FIG. 3 is a flow chart illustrating a process by which a model is validated using the system of FIG. 2, according to an example embodiment;
FIG. 4-A and FIG. 4-B is an example user interface depicting a 'Model Questionnaire' which includes a set of questions provided by the questionnaire module of the model validation system to the model validator for understanding the model being validated, according to an example embodiment.
FIG. 5 is an example user interface depicting a 'Work plan' screen designed by the work flow design module which identifies a plurality of model risks according to an example embodiment;
FIG. 6-A is an example user interface illustrating a 'Model testing' screen depicting classification of model risks into one or more risk areas and a validation test plan for each risk classified for the selected model according to an example embodiment;
FIG. 6-B is an example user interface depicting a 'Model testing' screen showing the results and observations of validation and providing recommendations according to an example embodiment;
FIG. 7 is an example user interface illustrating a 'code repository' and a 'workbench', according to an example embodiment;
FIG. 8 is an example user interface illustrating an 'executive summary report' showing the detailed validation reports, according to an example embodiment;
FIG. 9 is an example user interface depicting a 'knowledge repository' screen enabling the model validator to access a plurality of libraries, according to an example embodiment;
FIG. 10-A and FIG 10-B is an example user interface depicting 'Conversation Log' screen showcasing the entire captured communications occurred during the process of model validation between developers, supervisors and model validators, according to an example embodiment;
FIG. 11 is an example user interface illustrating screen for 'Supervisor Home Action Plan', according to an example embodiment; and
FIG. 12 is an example user interface illustrating 'Executive Summary' in a graphical representation stating the status of validation process, according to an example embodiment.

### DETAILED DESCRIPTION OF EXAMPLE EMBODIMENTS

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various example embodiments will now be described more fully with reference to the accompanying drawings in which only some example embodiments are shown. Specific structural and functional details disclosed herein are merely representative for purposes of describing example embodiments. Example embodiments, however, may be embodied in many alternate forms and should not be construed as limited to only the example embodiments set forth herein.

Accordingly, while example embodiments are capable of various modifications and alternative forms, example embodiments are shown by way of example in the drawings and will herein be described in detail. It should be understood, however, that there is no intent to limit example embodiments to the particular forms disclosed. On the contrary, example embodiments are to cover all modifications, equivalents, and alternatives thereof. Like numbers refer to like elements throughout the description of the figures.

Before discussing example embodiments in more detail, it is noted that some example embodiments are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional steps not included in the figure. The processes may correspond to methods, functions, procedures, subroutines, subprograms, etc.

Specific structural and functional details disclosed herein are merely representative for purposes of describing example embodiments. Inventive concepts may, however, be embodied in many alternate forms and should not be construed as limited to only the example embodiments set forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or," includes any and all combinations of one or more of the associated listed items. The phrase "at least one of" has the same meaning as "and/or".

Further, although the terms first, second, etc. may be used herein to describe various elements, components, regions, layers and/or sections, it should be understood that these elements, components, regions, layers and/or sections should not be limited by these terms. These terms are used only to distinguish one element, component, region, layer, or section from another region, layer, or section. Thus, a first element, component, region, layer, or section discussed below could be termed a second element, component, region, layer, or section without departing from the scope of inventive concepts.

Spatial and functional relationships between elements (for example, between modules) are described using various terms, including "connected," "engaged," "interfaced," and "coupled". Unless explicitly described as being "direct," when a relationship between first and second elements is described in the above disclosure, that relationship encompasses a direct relationship where no other intervening elements are present between the first and second elements, and also an indirect relationship where one or more intervening elements are present (either spatially or functionally) between the first and second elements. In contrast, when an element is referred to as being "directly" connected, engaged, interfaced, or coupled to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular example embodiments only and is not intended to be limiting. As used herein, the singular forms "a," "an," and "the," are intended to include the plural forms as well, unless the context clearly indicates otherwise. As used herein, the terms "and/or" and "at least one of" include any and all combinations of one or more of the associated listed items. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Spatially relative terms, such as "beneath", "below", "lower", "above", "upper", and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, term such as "below" may encompass both an orientation of above and below. The device may be otherwise oriented (rotated 90 degrees or at other orientations) and the spatially relative descriptors used herein are interpreted accordingly.

At least one example embodiment is generally directed to a model validation systems and methods for an easy flow of information between a model developer, a model validator and a validation supervisor. Example embodiments of the present technique provide a model validation system and method which systematizes validation and supervision of broad suite of models spread across the range of banking operations and determination of model risk per regulatory standards.

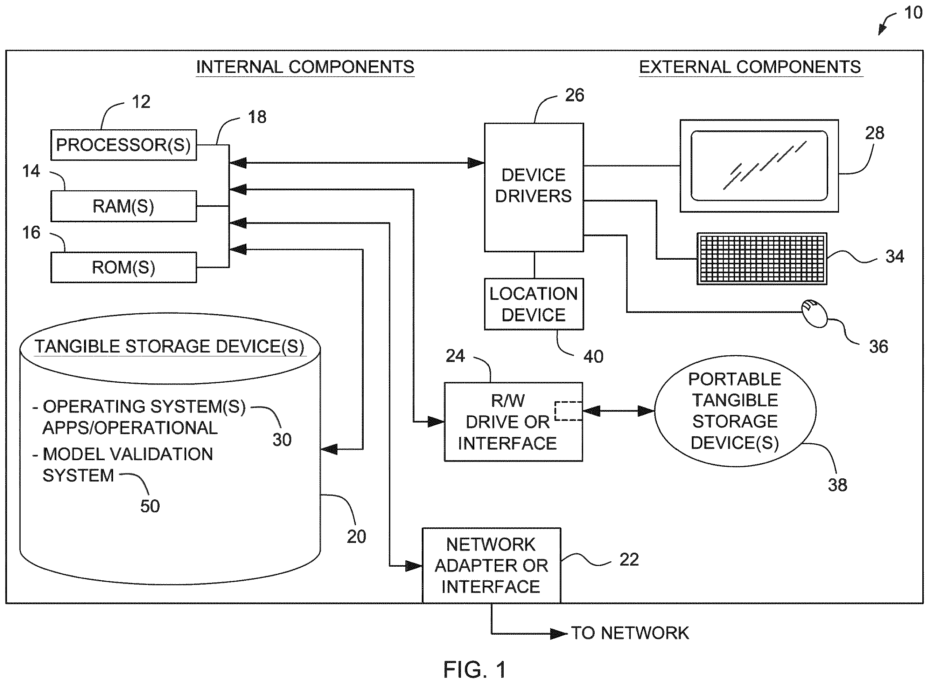

FIG. 1 is a block diagram of an embodiment of a computing device executing modules of a model validation system, according to an example embodiment. One example of a computing device 10 is described below. The computing device 10 comprises one or more processors 12, one or more computer-readable RAMs 14 and one or more computer-readable ROMs 16 on one or more buses 18. Further, computing device 10 includes a tangible storage device 20 that may be used to execute operating systems 30 and a model validation system 50. Both, the operating system 30 and the model validation system 50 are executed by the processor 12 via one or more respective RAMs 14 (which typically include cache memory).

Examples of storage devices 20 include semiconductor storage devices such as ROM 16, EPROM, flash memory or any other computer-readable tangible storage device that can store a computer program and digital information.

Computing device also includes a R/W drive or interface 24 to read from and write to one or more portable computer-readable tangible storage devices 38 such as a CD-ROM, DVD, memory stick or semiconductor storage device. Further, network adapters or interfaces 22 such as a TCP/IP adapter cards, wireless WI-FI interface cards, or 3G or 4G wireless interface cards or other wired or wireless communication links are also included in the computing device.

Computing device further includes device drivers 26 to interface with input and output devices. The input and output devices can include a computer display monitor 28, a keyboard 34, a keypad, a touch screen, a computer mouse 36, and/or some other suitable input device.

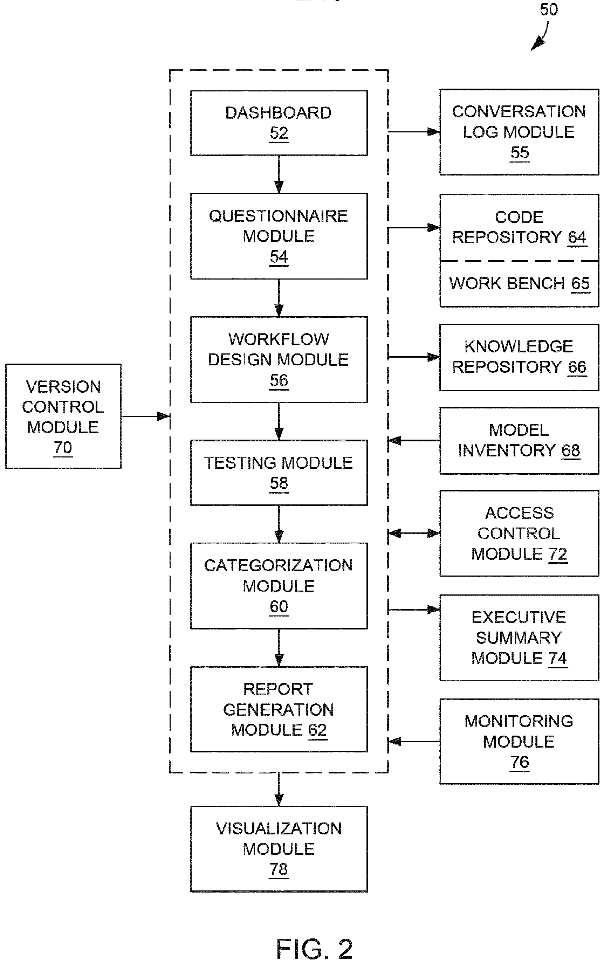

FIG. 2 is a block diagram of the model validation system 50, according to an example embodiment. The model validation system 50 (which may hereinafter be referred to as simply the system 50) includes a dashboard 52, a questionnaire module 54, a conversation log module 55, a workflow design module 56, a testing module 58, a categorization module 60, a report generation module 62, a code repository 64, a work bench 65, a knowledge repository 66, a model inventory 68, a version control module 70, an access control module 72, an executive summary module 74, a monitoring module 76 and a visualization module 78. Each component is described in further details below.

The modules of the model validation system 50 described herein are implemented in the computing device 10 of FIG.1. The various modules of the model validation system 50 including the dashboard 52, the questionnaire module 54, the conversation log module 55, the workflow design module 56, the testing module 58, the categorization module 60, the report generation module 62, the code repository 64, the work bench 65, the knowledge repository 66, the model inventory 68, the version control module 70, the access control module 72, the executive summary module 74, the monitoring module 76 and the visualization module 78 can be stored in the tangible storage device 20.

In one embodiment, the modules of FIG. 2, which includes the dashboard 52, the questionnaire module 54, the conversation log module 55, the workflow design module 56, the testing module 58, the categorization module 60, the report generation module 62, the code repository 64, the work bench 65, the knowledge repository 66, the model inventory 68, the version control module 70, the access control module 72, the executive summary module 74, the monitoring module 76 and the visualization module 78 can be downloaded from an external computer via a network (for example, the Internet, a local area network or other, wide area network) and network adapter or interface 22.

While FIG. 2 illustrates and the following provides a detailed description of various components/modules of the system 50, example embodiments are not limited thereto. For example, the above-identified modules of the system 50 may be implemented via one or more processors (e.g. the processor 12 of FIG. 1), where one or more processor is configured to execute computer readable instructions stored on a memory (e.g., the memory 20 of FIG. 1) to carry out the functionalities of each of the above-identified modules, which will be further described below.

In one example embodiment, the model validation system 50 includes the dashboard 52 configured to enable a model validator to select a model for validation from assigned set of models. The model on the dashboard 52 includes a plurality of pre-defined attributes. The pre-defined attributes includes details associated to the model and are added by a model developer. The pre-defined attributes provides assistance to the model validator for validation of the selected model.

Questionnaire module 54 is coupled to the dashboard 52 and configured to assist interactions between the model developer and the model validator. The questionnaire module 54 assists the model validator to define a set of questions related to the selected model. The set of questions includes a plurality of pre-defined questions. Further, the questionnaire module 54 is configured to enable the model validator to add a plurality of new questions related to each model and/or delete one or more pre-defined questions. Each set of added and/or deleted questions to the questionnaire module 54 is stored as a new version.

The questionnaire module 54 is configured to enable the model validator to communicate with the model developer. For example, the model validator may communicate with model developer for clarifications and resolutions with respect to a particular model. For conciseness, the questionnaire module 54 plays an important role for the model validator to understand the development of a particular model towards validation of the model. The questionnaire module 54 not only saves the model validators time by answering their questions from past but also helps them ponder over the reliability of assumptions and related information received from the model developers during last validation.

In one example embodiment, the conversation log module 55 is configured to capture a communication between the model developers and/or model validators. In one embodiment, the conversation log module 55 captures the entire communication progressing during the process of model validation between model developers, model validators and supervisors. The captured conversation logs assist the model validators to refer the historical conversation logs in case of revalidations.

Workflow design module 56 is coupled to the dashboard 52 and is configured to identify a plurality of model risks and further configured to design a validation work plan based on the identified risks. For example, to identify a plurality of model risks, the model risks are broadly classified into one or more risk areas. Each risk area can have multiple risks and each risk may have multiple validation work plan. Examples of risk areas for a particular model selected for validation include and are not limited to data integrity, conceptual soundness, outcome analysis, ongoing monitoring, and computer based process or combinations thereof.

In one example embodiment, the workflow design module 56 also enables the model validator to use a customized validation work plan related to each model risk. The customized validation work plan enables the model validator to execute a plurality of statistical tests for the selected model. The code repository 64 is configured to enable access to a plurality of statistical tests to the model validator. The plurality of statistical tests is implemented for model validation.

In one example embodiment, the customized validation work plan is a stored 'default work plan' related to a desired risk. The default customized validation work-plan serves as a cross checks to the model validator to ensure that all the important validation tests are executed.

Code repository 64 is coupled to workflow design module 56 and is configured to provide a set of codes in statistical languages. The set of codes are configured to enable the model validator for quick and efficient model validation. In one embodiment, the set of codes are in common statistical languages which are used frequently in various stages of model validation.

In one example embodiment, the set of codes stored in the code repository 64 can be added to a code bin. The codes in the code repository 64 are generic codes that the model validator can use at the time of executing the validation test plan. After adding the codes to the code bin, the model validator can access the workbench 65. The workbench 65 allows the model validator to view, create, choose and/or edit the codes in the code bin and also execute the codes. The workbench 65 includes an editor that enables the model validator to write custom codes in R, Python or SAS.

In one example embodiment, SAS (Statistical Analysis System) is a software suite utilized for advanced analytics, multivariate analyses, business intelligence, data management, and predictive analytics. In another example embodiment, R is a programming language and software environment for statistical computing and graphics for Statistical Computing. Further, python is used as high-level, general-purpose, interpreted dynamic programming language. In addition, the model validator can also connect to a database or upload a csv file to provide input data to the workbench. After executing the codes, the model validator has an option to view the output and also generate graphs in the Output Tab provided by the workbench 65.

In one embodiment, the workflow design module 56 is further configured to display historic work plan for each model to the model validator. For example, in case of revalidations the work plan from last validation task is populated which again helps the model validator to save a lot of time and pushes him to think beyond the sources of risk covered during last validation.

The knowledge repository 66 is coupled to the code repository 64 and configured to enable the model validator to access a plurality of libraries. The libraries include information related to the plurality of models. The knowledge repository 66 is in searchable format. In one example embodiment, the knowledge repository 66 is also coupled to the code repository 64 and is configured to enable the model validator to access a plurality of online libraries. The libraries include information related to the plurality of models. For example, the online libraries include information and documentations related to plurality of models. The online libraries can provide assistance to the model validators to understand models from different line of business and belonging to different model families.

In another example embodiment, the knowledge repository 66 comprises a search option configured to enable the model validator to search for specific information from the knowledge repository 66. For example, the model validator can search for different associated keywords related to a specific topic of a particular model and tag the document. Further, the knowledge repository 66 also offers the model validator the preference for concise synthesis and space for personal notes for every validation. In addition, a filter option is also available for the model validator to filter out documents related to specific line of business. Moreover, the model validator also have the option to edit and add tags to the documents which may help in making the search more and more efficient with time. Further, the model validator can also add more documents to the library. The knowledge repository 66 also provides with full text searches through all the documents.

Testing module 58 is configured to execute a selected set of statistical tests corresponding to the selected model and to store a corresponding set of validation results in the memory 20 obtained during validation of the selected model. The executed set of selected statistical tests for the validation work plan corresponding to the selected model generates a set of validation results of the selected model.

In one embodiment, the testing module 58 also facilitates to upload the input and output files, graphs, images, etc. from predefined location provided to the model validator making sure that the model validator does not miss out on any of the results and observations from the validation tests performed. The model validators are also required to summarize the validation results for each test highlighting the issues and recommendations as well. Moreover, the testing module 58 is configured to record all observations and results obtained in the process of performing validation tests. In addition, the testing module 58 also enables the model validator to write custom codes for the validation and update them in the application's library for future reference.

The categorization module 60 is configured to categorize the plurality of model risks into one or more categories. The categorization is performed based on the set of results obtained during the validation of the selected model. For example, the model validator categorizes the plurality of model risks into a given risk bucket. For example, the risk bucket are categorized as 'low', 'medium' and 'high'. The categorization facilitates the asking of one or more queries to the model developer for remedial action plan for validation of the selected model. Moreover, the categorization is performed based on the set of testing results such as the observations and results recorded by the testing module 58.

Report generation module 62 is configured to generate one or more reports including assessment parameters for the selected model. The assessment parameters include the validation results obtained during validation of the selected model. In particular, the report generation module 62 is configured to generate one or more reports for the validation work plan and the plurality of model risks. The one or more reports are in compliance with regulatory standards. In one example embodiment, the report generation module 62 is configured to process the data related to validation tests and findings, and further configured to generate one or more reports with output data in plurality of data visualization formats. The reports generated are in compliance with the varying standards governed by the regulatory body on timely basis.

In one example embodiment, post validation the model validator needs to put the details of validation tests, findings, issues and recommendations in a reporting template for the regulatory bodies to be able to assess the model. The report generation module 62 provides with default reporting templates to make sure that the reports are aligned with the regulatory requirements. For example, several types of reports can be generated. One type of the report generated may be a concise report containing the summary of the validation, stating only about the issues and recommendations, if any, called as Executive Summary report. And the other type of report generated may be a more detailed report describing the process, assumptions, methodologies, etc.

In one embodiment, the report generation module 62 may include a document bin. The document bin facilitates to assist the model validator with creation of report by making sure that the model validator does not miss out on any of the important findings or results from the validation tests. The model validator can add the validation results to the document bin anytime during the validation process. The validation results may be in format of text, image and/or graphs.

Model inventory 68 includes information associated with one or more models. In particular, the model inventory 68 assists the model validator in understanding of the selected model for validation. In one example embodiment, there may be a plurality of validation cycles for the selected model. For instance, the model validator may validate the selected model one or more times in a particular period. After completion of each validation of the selected model, the information associated with each of validation may be stored in the model inventory 68. As a result, the model inventory 68 stores all the historic information associated with the validation of the selected model and can be accessed whenever required. For example, the model inventory 68 stores information such as number of validation cycles for the selected model, actions performed, the name of the model validator and the like.

A version control module 70 is configured to create and store one or more versions of operations performed by the model validator on each of the modules of the model validation system 50. For example, the operations performed by the model validator and associated with each of modules such as the questionnaire module 54, the work flow design module 58, the testing module 58, the categorization module and report generation module 62 are stored as plurality of revisions in the memory 20.

The access control module 72 is configured to provide a plurality of levels of access to a corresponding plurality of roles. In one embodiment, the access control module 72 is configured to assist the top level supervisor in managing model inventory 68 by planning current and future validations. The access control module 72 is further configured to enable the top level supervisor to manage human resource allocation for ongoing and future validations efficiently. For example, the top level supervisor can review plurality of components contributing to the questionnaire module 54, the workflow design module 56, the testing module 58, the report generation module 62 and/or combinations thereof. In addition, the access control module 72 empowers the top level supervisor with an option to reassign the model validation to a new model validator, add/delete/edit the list of reviewers of the model validation and/or combinations thereof.

Executive summary module 74 is configured to facilitate monitoring of organization-wide model inventory 68 at plurality of levels consisting of line of business, model families and models or combinations thereof. The executive summary module 74 is further configured to provide status and assess severity of risks and monitor the risk resolution plans and their effectiveness. In one example embodiment, the executive summary module 74 is configured to provide the supervisors and others such as top level managers, with an overall picture of the model validation, both those are in progress as well as the ones that are in pipeline. The executive summary module 74 has been designed in a way that the supervisor can see the overall progress of a validation task as well as the progress on various subtasks associated with the validation task. The supervisor can plan for the future by looking at the model validations in the pipeline. In one example embodiment, the supervisor is provided with a home page for assistance with respect to review of the components of a model validation system 50. For example, the supervisor can review questionnaire module 54, the workflow design module 56, the testing module 58, the categorization module 60, the report generation module 62 and/or combinations thereof.

The memory 20 of FIG. 1 stores data related to each model and status of each model validation. The memory 20 is accessed by the user or the model validator to view the data corresponding to each model and status of model validation. As a result, the system 50 also facilitates the visualization for each model. In one embodiment, the visualization module 78 is configured to provide visualization of each model. For example, the user can create visual flow chart for the validation test that are being performed. As a result, the visualization will assists the users to document the flow of model validation for understanding and re-usability. Further, the model validator can choose from a plurality of templates available. In one embodiment, in visualization each node will act as a navigation point to the corresponding phase in the model validation process.

The system 50 includes the monitoring module 76 to monitor one or more assumptions of a developer's model to infer a health of the model. The assumptions are parameters presumed to be true during life of the model. In one example embodiment, the assumptions are conditions or parameters that are presumed to be true during lifecycle of a particular model. For example, the assumptions may be related to the market stability, increase in employment rate, decline in conversion rate and the like. The assumptions may be environmental or statistical. The environmental assumptions may be internal or external assumptions. Examples of internal assumptions for a particular model may include 'stock up effect that take place only post fierce promotion for a product'. Examples of external assumptions for a particular model may include 'Certain Holidays (eg. Halloween) fail to have an impact on certain categories of product'. Thus, for each and every model there are different assumptions that are to be monitored in order to judge the goodness of the model. The monitoring module 76 provides the use/purpose and whether the model is being consumed in the right way or not.

In one example embodiment, the memory 20 of FIG. 1 may also store computer-readable instructions for each of the above-described modules of the system 50. Accordingly, one or more processor, such as the processor 12 of FIG. 1, is configured to execute the computer-readable instructions stored on the memory 20 to carry out the functionalities of the above-described modules.

The above described system may be implemented in validation of plurality of quantitative models used by financial institutions, banks and several other organizations where model risk management plays a vital role. The manner in which the model validation process facilitates the end to end needs of the model validator towards understanding and validation of a model is described in further detail below.

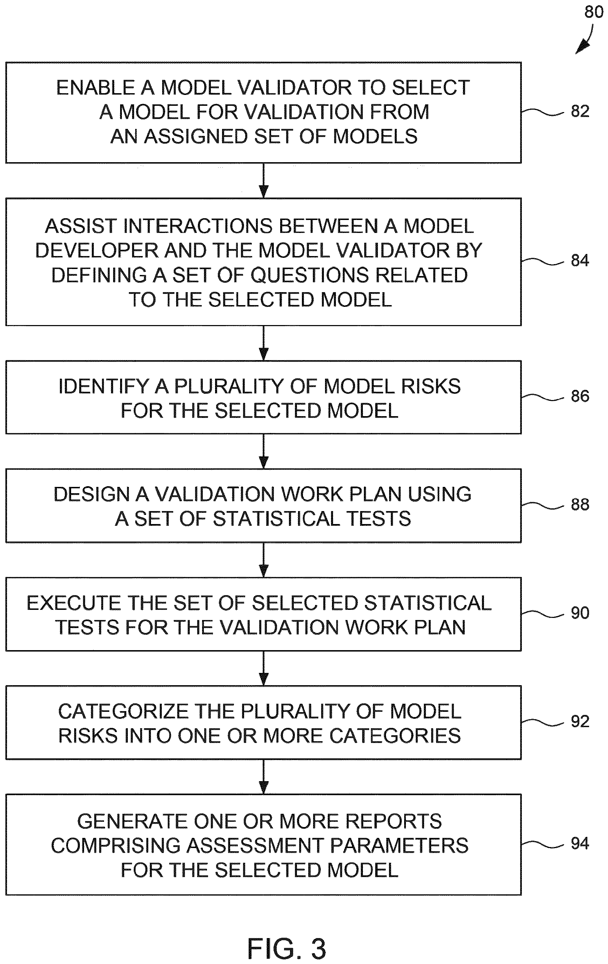

FIG. 3 is flow chart illustrating a process by which a model is validated using the system of FIG. 2, according to an example embodiment. FIG. 3 will be described from the perspective of a processor (processor 12) that is configured to execute computer-readable instructions to carry out the functionalities of the above-described modules of the system 50 shown in FIG. 2.

For exemplary purposes only, the model validation method 80 is described with reference to all the aspects of a model validators needs towards understanding and validating a particular model. Each step in the model validation method is described in further detail below.

At step 82, the processor 12 enables a model validator to select a model for validation from an assigned set of models. The selected model includes a plurality of pre-defined attributes. The pre-defined attributes includes details associated to the model and are added by a model developer. The pre-defined attributes provides assistance to the model validator for validation of the selected model.

At step 84, the processor 12 assist interactions between a model developer and the model validator by defining a set of questions related to the selected model. In one embodiment, the set of questions includes a plurality of pre-defined questions. Further, the questionnaire module 54 is configured to enable the model validator to add a plurality of new questions related to each model and/or delete one or more pre-defined questions. Each set of added and/or deleted questions to the questionnaire is stored as a new version. In one example embodiment, the interactions and the set of questions benefits the model validator in the model understanding part of the application. The processor 12 enables the model validator to communicate with the model developer. For example, the model validator may communicate with model developer for clarifications and resolutions with respect to a particular model.

At step 86, the processor 12 identifies a plurality of model risks for the selected model. In one embodiment, to identify the model risks, the model risks are broadly categorized into various risk areas. Each risk area can have multiple risks. Each risk can have multiple validation work plans. The model validator selects a set of statistical tests from a plurality of statistical tests stored in a code repository. The code repository is configured to enable access to a plurality of statistical tests to the model validator. The plurality of statistical tests is implemented for model validation.

At step 88, the processor 12 designs a validation work plan using a set of statistical tests. The validation work plan factors the identified model risks. In one embodiment, the model validator is enabled to use a customized validation work plan related to each model risk. The customized validation work plan enables the model validator to execute a plurality of validation tests. The customized validation work plan makes sure that the model validator does not miss out on any of the important validation tests.

At step 90, the processor 12 executes the set of selected statistical tests for the validation work plan to generate a set of validation results of the selected model. The statistical tests are executed to enable the model validator for quick and efficient model validation. In one embodiment, the statistical tests are in common statistical languages which are used frequently in various stages of model validation.

At step 92, the processor 12 categorizes the plurality of model risks into one or more categories. The categorization is performed based on the set of validation results such as the observations and results recorded obtained during the validation of the selected model. In one example embodiment, the model validator categorizes the plurality of model risks into a given risk bucket. For example, the risk bucket are categorized as 'low', 'medium' and 'high'. The categorization facilitates the model validator the asking of one or more queries to the model developer for remedial action plan for validation of the selected model.

At step 94, the processor 12 generates one or more reports comprising assessment parameters for the selected model. The assessment parameters include the validation results obtained during validation of the selected model. In one example embodiment, the one or more reports are generated for the validation work plan and the plurality of model risks in compliance with regulatory standards. In one embodiment, the data related to validation results and findings is processed to generate one or more reports with output data in plurality of data visualization formats. The reports generated are in compliance with the varying standards governed by the regulatory body on timely basis.

The model validation process described above has been conceptualized looking at the gaps in today's world's model risk management process. The process 80 features a solution working on integrating the core aspects of a model risk management process i.e. control & compliance, collaboration & communication, efficiency & effectiveness and regulatory adherence.

The above described system and method for model validations implements several user interfaces to enable the user to validate and generate plurality of validation reports. The user interfaces for model validation are designed with a focus on keeping it user friendly and making sure that all the user's needs are being captured. The word 'model validator' and 'user' used in the description below reflects same meaning.

The model validation system 50 facilitates the user with a landing page for each user irrespective of the role assigned to them. When the user is already registered with the model validation system 50, the user can type his username and password and login. In case the user is not a registered user, the user has an option to request access by entering the required details in the request access section. A mail may be triggered to the administrator of the model validation system 50 notifying about the request and seeking approval to add the user to model validation authorized user list. The system 50 provides a tour feature to assist the new users get acquainted with the flow and features of the model validation system 50 through a tutorial video.

Post the role based authentication, the model validator would land on his home page. The home page provides the model validator an overview of the validation tasks assigned to him and the tasks he/she has already completed in past. The model validation system 50 also provides a feature of setting the timelines for the subtasks involved. The model validator can also view the tasks for which he/she has been assigned as a reviewer. The model validator can also view the notifications and messages, if any. Clicking on a particular task allows the model validator access to the validation sections of that particular task, the first being model understanding. Some of the relevant interfaces with respect to model validation are described in further detail below.

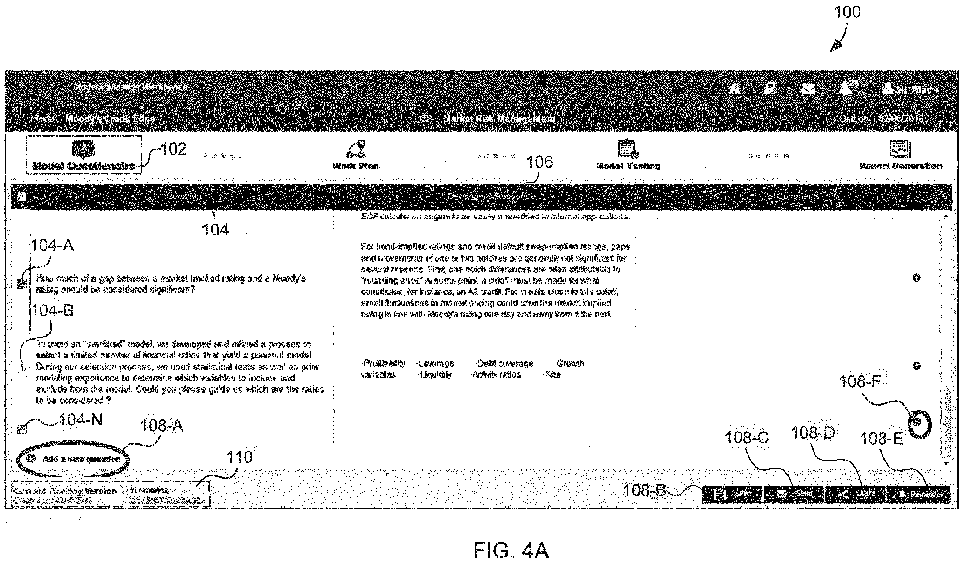

FIG. 4-A is an example user interface 100 depicting a 'Model Questionnaire' as represented by horizontal navigation bar 102 which includes a set of questions provided by the questionnaire module 54 of the model validation system 50 to the model validator for understanding the model being validated, according to an example embodiment. The navigation bar 'Model Questionnaire' 102 provides the model validator with an option to view a list of questions (column 104). The set of questions 104-A through 104-N provides assistance to the model validator for model understanding part of the selected model for validation. The add button 108-A enables the model validator to add questions that are necessary to be answered to understand the underlying assumptions, hypothesis, methodology, etc. followed by the model developer during the development of a particular model. Moreover, the add button 108-A enables the model validator to add questions of his choice and send to the developer using the send option (button 108-C) and save using save option (button 108-B). The Model Questionnaire' (navigation tab 102) also facilitates reminders (button 108-E) to assist the team in adhering to the timelines.

In one example embodiment, when the model validator is validating the model for the first time, the 'Model Questionnaire' 102 helps the model validator with a default set of questions (104-A through 104-N) customized to the line of business, to which the model validator must seek the answers in order to have a sound understanding of the model. For example, when the model is being revalidated, the questions and developer's response to those questions, from last validation are populated to help the validator not only save his time but also push him to verify the developer's responses from last validation. The save button 108-B enables the model validator to save the questionnaire to a database. In one example embodiment, the share button 108-D enables the model validator to share the questionnaire with the supervisor.

The delete button 108-F enables the model validator to delete a particular row in the set of questions (column 104). The developer's response with respect to queries of the model validators is listed in column 106.

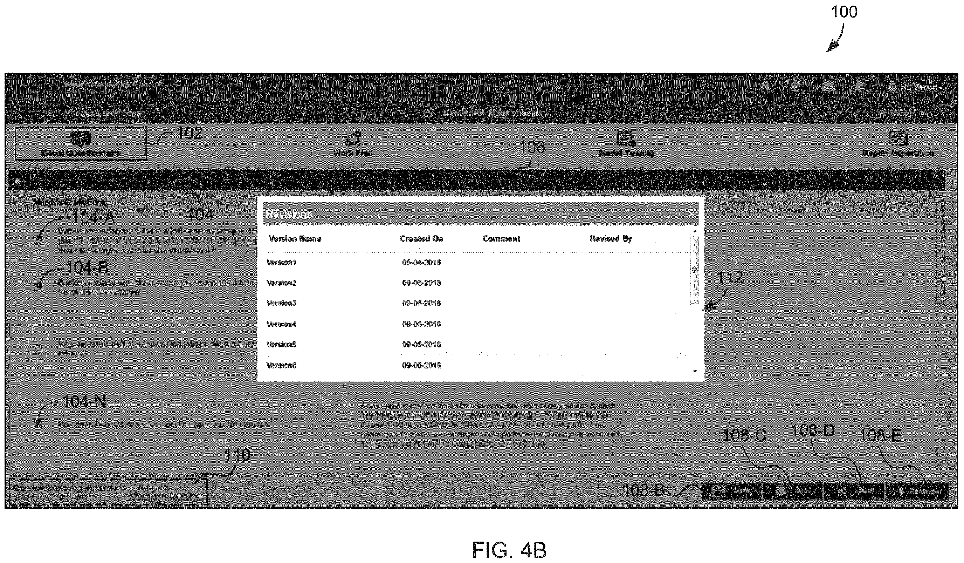

In one embodiment, the reference numeral 110 displays the current working version of the model questionnaire and also enables the model validator to view the previous versions. For example, the previous versions are the versions showing the operations performed by the model validator on the model questionnaire tab 102. The model validator also can view the list of revisions with respect to Model Questionnaire tab 102 as shown in FIG. 4-B. FIG. 4-B illustrates a pop-up window 112 showing the list of revisions performed by the model validator associated with the Model Questionnaire tab 102. The details such as 'version name', 'created on', 'comment' and 'revised by' are shown in pop up window as shown by reference numeral 112.

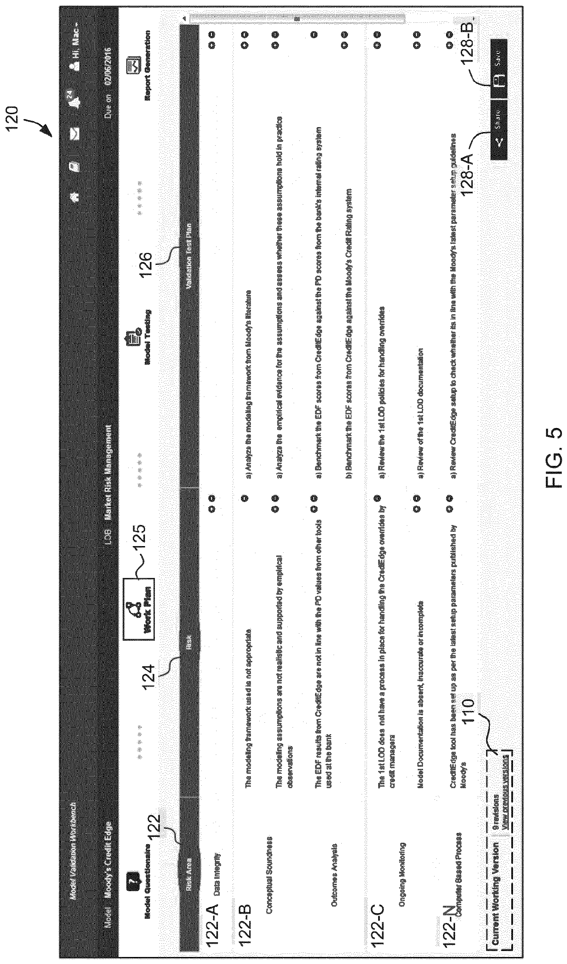

FIG. 5 is an example user interface 120 depicting a 'work plan' screen as represented by horizontal navigation bar 125 and designed by the work flow design module which identifies a plurality of model risks, according to an example embodiment. The interface 120 is dedicated to the design of validation work plan which includes identifying sources of model risk and deciding on the validation work plan for the corresponding source of risk. The model validation system 50 provides assistance to the validators with a line of business customized default work plan to start with. In the illustrated embodiment, the model risks are broadly classified (column 122) and risks are displayed in a tabular form. Examples of the model risks classified by the system of FIG. 2 include data integrity 122-A, conceptual soundness (cell 122-B), outcome analysis (cell 122-C) and the like. Further each risk can include multiple risks (as represented in column 124). The multiple validation plans for the risks classified are displayed in column 126.

In one embodiment, the work plan interface 125 also provides a feature of providing one or more versions of operations performed by the model validator on the interface 125 as shown by reference numeral 110. Further, the save button 128-B enables the model validator to save the work plan to a database. In one example embodiment, the share button 128-A enables the model validator to share the work plan with the supervisor.

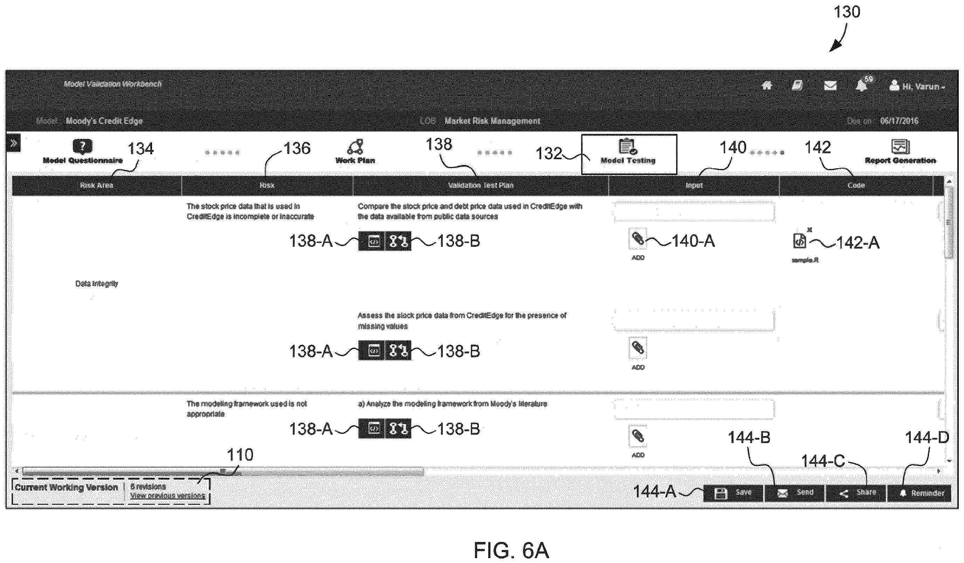

FIG. 6-A is an example user interface 130 illustrating a 'Model testing' screen depicting classification of model risks into one or more risk areas and a validation test plan for each risk classified for the selected model according to an example embodiment.

The horizontal navigation bar 132 enables the model validator to execute the selected set of statistical tests corresponding to the work plan for the selected model for validation based on the identified model risks and stores a corresponding set of validation results obtained during validation of the selected model and further categorizes model risks into different categories based on validation results, according to an example embodiment.

In the illustrated embodiment, the model risks are broadly classified into Risk areas (column 134). Each risk area can have multiple risks (column 136). Further, each risk can have multiple validation plans (as shown in column 138). The column 138 enables the model validator. Button 138-A represents access to code repository 64 and 138-B represents the access to visualization module 78 of FIG.2. In one embodiment, the code repository button as shown by reference numeral 138-A allows the model validator the access to code repository and acts as a direct link which includes a set of codes in statistical languages and enables the model validator for quick and efficient model validation. In one embodiment, the visualization module 78 is configured to provide visualization of each model. For example, the user can create visual flow chart for the validation test that are being performed. As a result, the visualization will assists the users to document the flow of model validation for understanding and re-usability.

The cell 140 illustrates input files and details on input file. The add button 140-A allows the model validator to add the input files. The column 142 illustrates one or more codes which enables the model validator to access the codes which are written in workbench by the model validator. For example, the column 142 (code) illustrates a sample R code as shown by reference numeral 142-A

The model validator can upload input files and output files from predefined location provided to the model validator making sure that the validator does not miss out on any of the results and observations from the validation tests performed. The save button 144-A enables the model validator to save the validation work plan to a database. In one example embodiment, the send button 144-B and the share button 144-C enables the model validator to send and share the work plan with the supervisor. The model testing (navigation tab 132) also facilitates notifications and reminders (button 144-D) to assist the team in adhering to the timelines.

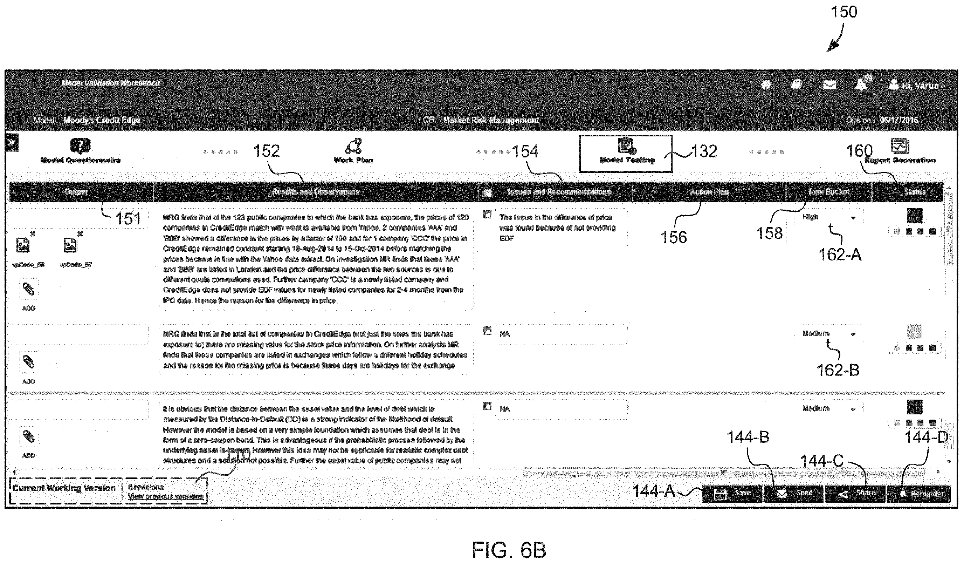

FIG. 6-B is an example user interface 150 depicting a 'Model testing' screen showing the results and observations of validation and providing recommendations according to an example embodiment. The output files and details on output files are shown in column 151. Results of the validation and their observations are showing in column 152. The issues faced during validation and recommendations shared by validator are illustrated in column 154. Further the column 156 provides the action plan for the model validator. In the illustrated embodiment, the action plan lists the action plan details. The action plan details specified by the model developer are recorded herein. The model risks are classified into various risk buckets (column 158). For example, the model validator can rate the risks as 'high', 'medium' and 'low' based on its severity provided by the dropdown 162-A and 162-B. Lastly, the status column 160 provides the status of the validation plan.

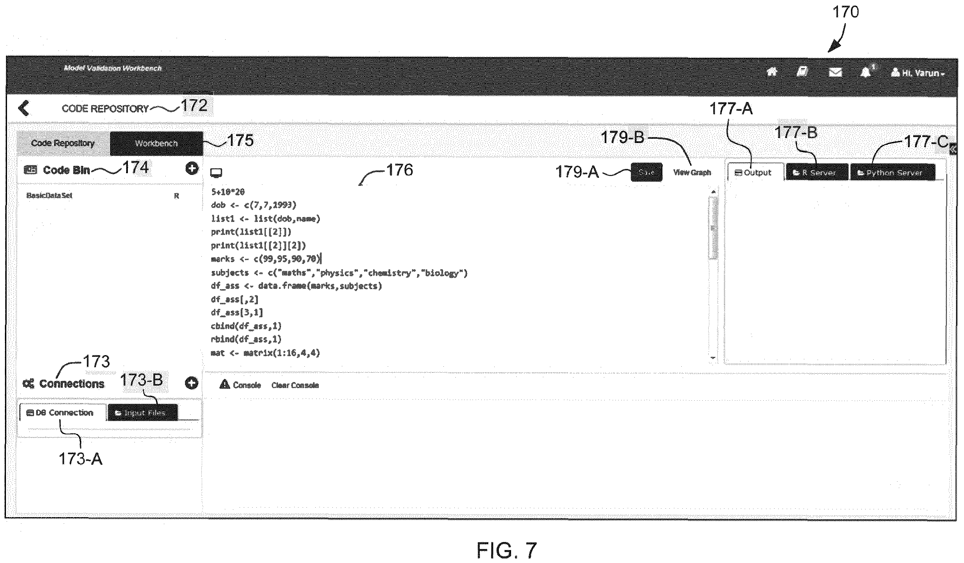

FIG. 7 is an example user interface 170 illustrating 'code repository' and 'workbench', according to an example embodiment. In one example embodiment, the set of codes stored in the code repository 172 can be added to a code bin 174. The codes in the code repository 172 are generic codes that the model validator can use at the time of executing the validation test plan. After adding the codes to the code bin 174, the model validator can access the workbench 175. The workbench 175 allows the model validator to view, choose and/or edit the codes in the code bin 174 and also execute the codes. The workbench 175 includes an editor as shown by sub-screen 176 that enables the model validator to write custom codes in R, Python or SAS. In addition, the model validator can also connect (using the option 173) to a database (as shown by option 173-A) to upload a csv file to provide input data files (as shown by option 173-B) to the workbench 175. After executing the codes, the model validator has an option to save (using button 179-A) and view the output and also generate graphs (using button 179-B) in the Output Tab 177-A provided by the workbench 175. The tab 177-B and 177-C allows the model validator to access the R- server and python server.

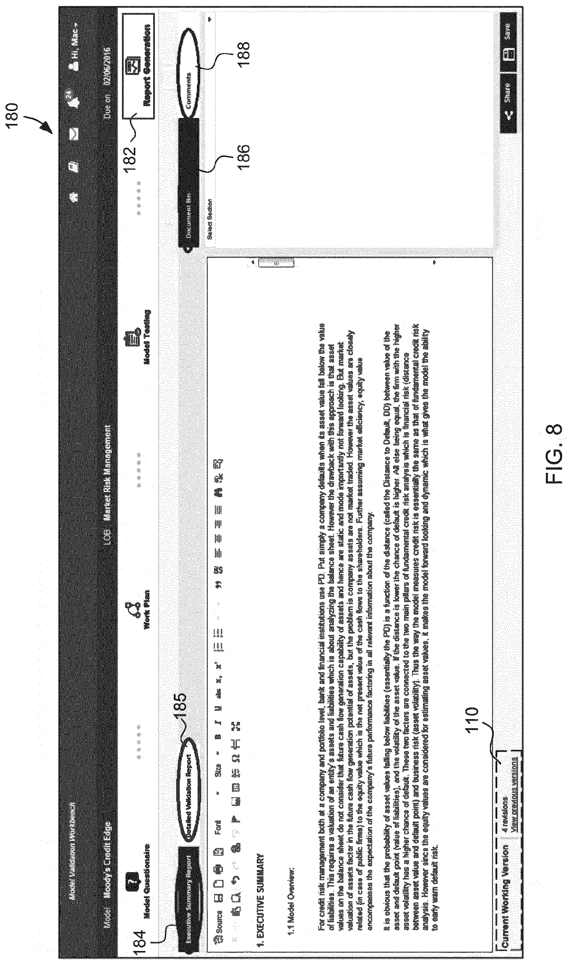

FIG. 8 is an example user interface 180 illustrating an 'executive summary report' showing the detailed validation reports, according to an example embodiment. After completion of validation, the model validator needs to record the details of validation tests, findings, issues and recommendations in a reporting template for the regulatory bodies to be able to assess the model. A concise report presenting overall status including summary of the validation, talking about the issues and recommendations, called as Executive Summary report is generated. The user interface 180 depicts the screen of report generation (navigation bar 182) which includes a tab 184 for the 'Executive Summary report'. Further, the user interface 180 depicts the screen of report generation (navigation bar 182) which includes a tab 185 for selection of 'Detailed View of the validation report'. The detailed report describes in detail about the process, assumptions, methodologies, etc. with respect to model validation.

The document bin (cell 186) provides assistance to the model validator with creation of report by making sure that the validator does not miss out on any of the important findings or results from the validation tests. The cell 186 enables the model validator to view the document bin modules and text. The cell 188 allows the model validator to view the comments provided during validation. In one embodiment, the report generation interface 182 also provides a feature of providing one or more versions of operations performed by the model validator on the interface 182 as shown by reference numeral 110.

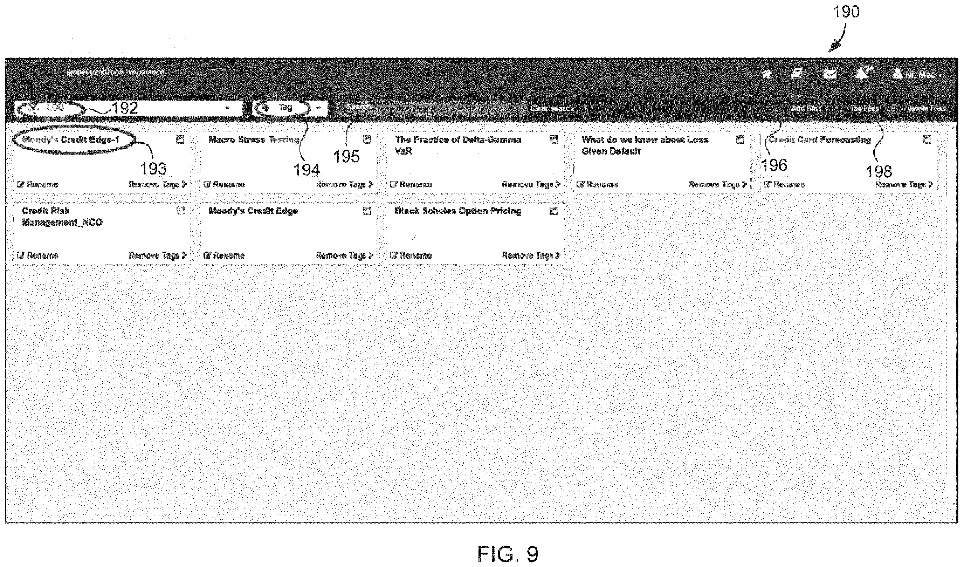

FIG. 9 is an example user interface 190 depicting 'knowledge repository' screen enabling the model validator to access a plurality of libraries, according to an example embodiment. The knowledge repository provides its users with an online library containing multiple documents and journals. The online library assists model validators to understand models from different lines of business and belonging to different model families. The drop down LOB 192 (Line of Business) facilitates the model validator to select the LOB that needs to be filtered. The drop down 194 enables the model validator to select the tag that needs to be filtered. Moreover, the user can search (using the text box 195) for documents related to a particular model and can also search for different associated keywords. For example, the model validator needs to type a 'keyword' in the text box 195 to search the file in knowledge repository. The users have an option to edit and add tags to the documents which helps in making the search more and more efficient with time. The model validator needs to 'Click' on the button 198 to tag files. The user can also add more documents to the library. In one example embodiment, the model validator can 'Click' on the button 196 to add a new file into repository. The cell 193 shows the header of the added file into the knowledge repository.

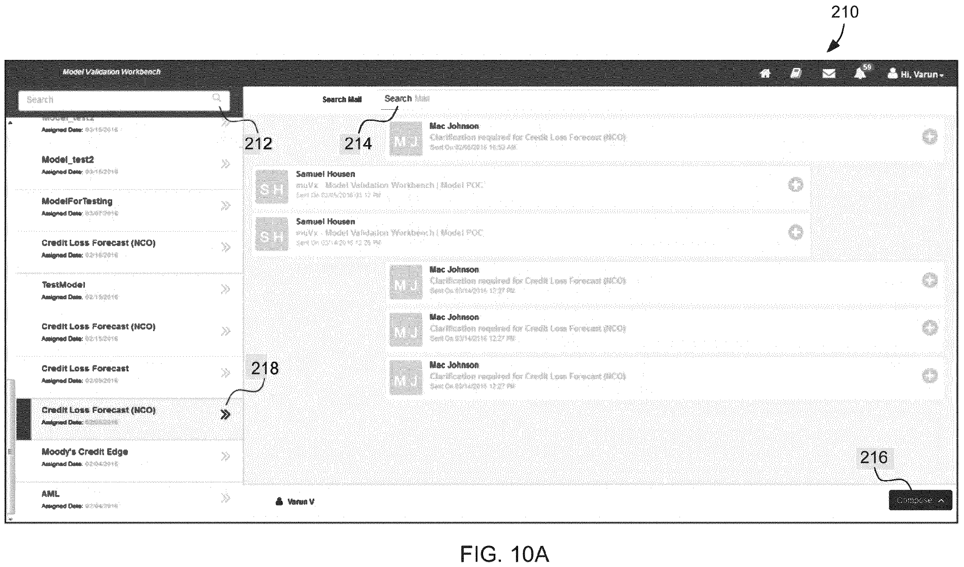

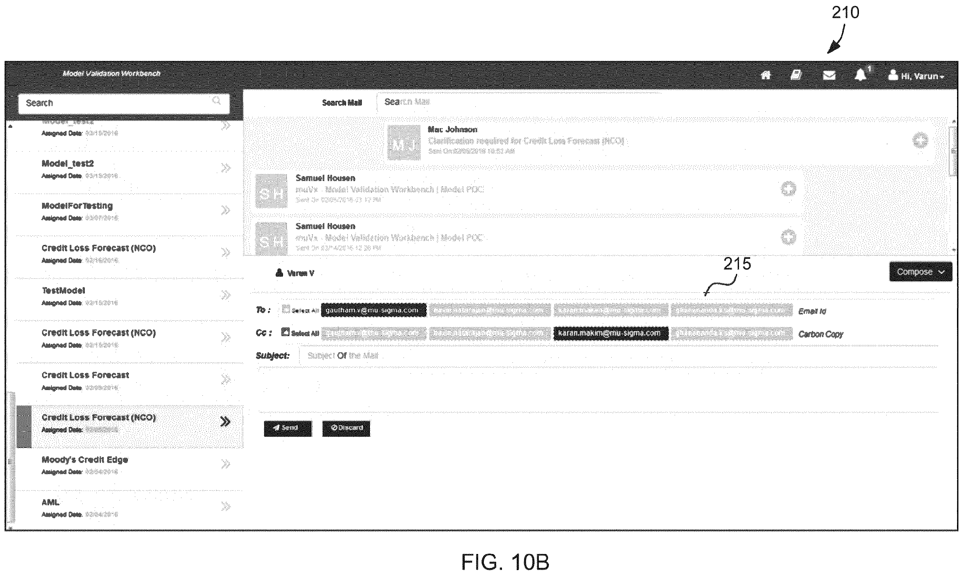

FIG. 10-A is an example user interface 210 depicting 'Conversation Log' screen showcasing the entire captured communications occurred during the process of model validation between developers, supervisors and model validators, according to an example embodiment. In the illustrated embodiment, the text box 212 enables the user to filter the validation threads to view the specific thread with respect to a particular model selected for validation. Further, the text box 214 enables the user to search for a specific mail to get the necessary information via mail. In addition, on clicking the button 216, the user can toggle to compose new mail template. On clicking the 'compose' button 216, a pop up screen 215 as shown in FIG. 10-B is displayed. The pop-up screen 215 allows model validator to choose the contact list from the address book. For example, in the illustrated embodiment, the email addresses of the people associated with the selected model 'Credit loss Forecast NCO' as shown by reference numeral 218 is populated when the model validator clicks on 'compose' button 216.

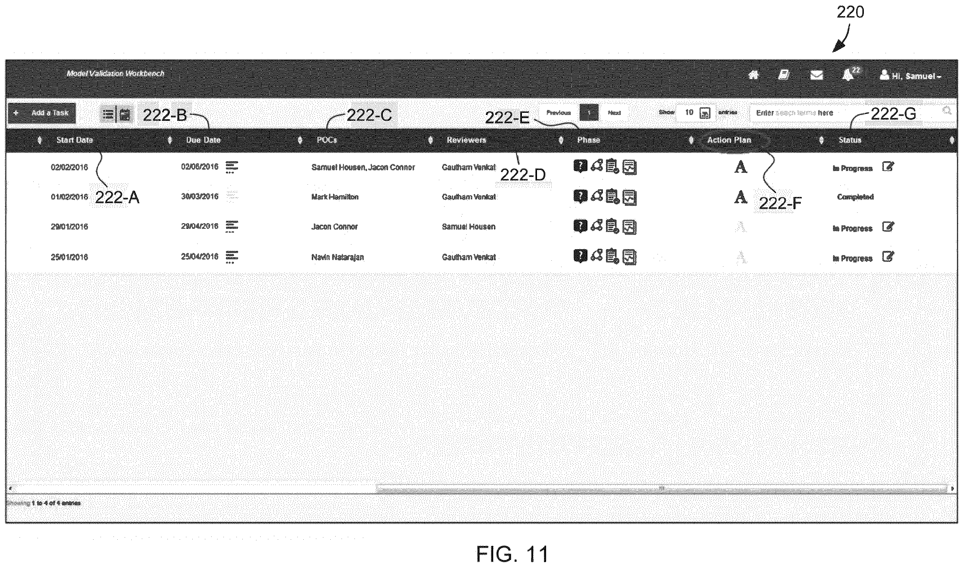

FIG. 11 is an example user interface 220 illustrating screen for 'Supervisor Home Action Plan', according to an example embodiment. The screen 220 lists the active action plan on supervisor homepage. In particular, the action plan provides assistance to the top level supervisor in managing model validation plans by planning current and future validations. Further, the supervisor can manage human resource allocation for ongoing and future validations efficiently. On clicking a particular action plan (column 222-F), a popup window appears from supervisor home which shows the details of the action plan for a selected model for validation.

In one example embodiment, when the supervisor wants to assign a model validation task to the model validator, the supervisor can click on that particular instance in the chart and a pop up window appears. For example, the supervisor is provided with a Gantt Chart which displays a holistic view of model inventory. The holistic view of model inventor as displayed to supervisor provides the progress of ongoing model validations as well as the validation pipeline. In addition, the supervisor can also view the resource availability which allows the supervisor to assign the validation to one of the validators in the team.

Further, the screen 220 provides the start date (column 222-A), the due date (column 222-B), Point of Contact (POC) 222-C, the reviewers 222-D, the various phases 222-E, the action plan 222-F, and status 222-E of a particular model.

The screen 220 allows the supervisor to view the list of available model validators at that point of time. Supervisor can assign the task to any available model validator. An option is provided to the supervisor to view the human resources inventory and pipeline by clicking on the 'View Resources' option in the above interface. In one embodiment, the supervisor can assign one or more models to the model validator for validation in many other ways and is not limited by a particular method as described herein.

To review the components of the model validation system 50, the supervisor needs to click on the icons indicated against each validation task. Moreover, the supervisor can open an already completed validation for revalidation as well with just one click. In addition, the supervisor can also reassign the model validation to a new validator in case there is a need. The supervisor can also add/edit the list of reviewers as well as point of contacts for model understanding.

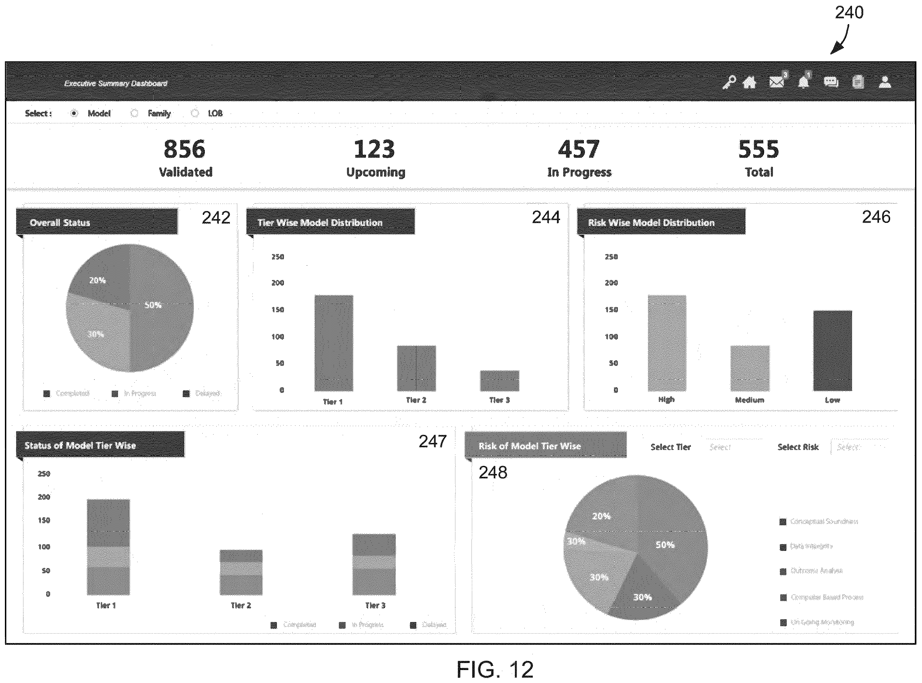

FIG. 12 is an example user interface 240 illustrating 'Executive Summary' in a graphical representation stating the status of validation process, according to an example embodiment. The screen 240 provides the status of validation process of a particular model. The screen 240 provides details like 'Number of models completed' and/or 'Pending' and/or 'In progress' and the like. In the illustrated example embodiment, the circular chart 242 provides the overall view based on model. Further, the bar chart 244 represents tier-wise distribution of models. The graph 246 represents the risk-wise distribution of models. Moreover, the graph 247 represents status of model tier wise. Lastly, the circular chart 248 shows the risk of model tier wise.

Portions of the example embodiments and corresponding detailed description may be presented in terms of software, or algorithms and symbolic representations of operation on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

The device(s)/apparatus(es), described herein, may be realized by hardware elements, software elements and/or combinations thereof. For example, the devices and components illustrated in the example embodiments of inventive concepts may be implemented in one or more general-use computers or special-purpose computers, such as a processor, a controller, an arithmetic logic unit (ALU), a digital signal processor, a microcomputer, a field programmable array (FPA), a programmable logic unit (PLU), a microprocessor or any device which may execute instructions and respond. A central processing unit may implement an operating system (OS) or one or software applications running on the OS. Further, the processing unit may access, store, manipulate, process and generate data in response to execution of software. It will be understood by those skilled in the art that although a single processing unit may be illustrated for convenience of understanding, the processing unit may include a plurality of processing elements and/or a plurality of types of processing elements. For example, the central processing unit may include a plurality of processors or one processor and one controller. Also, the processing unit may have a different processing configuration, such as a parallel processor.

Software may include computer programs, codes, instructions or one or more combinations thereof and may configure a processing unit to operate in a desired manner or may independently or collectively control the processing unit. Software and/or data may be permanently or temporarily embodied in any type of machine, components, physical equipment, virtual equipment, computer storage media or units or transmitted signal waves so as to be interpreted by the processing unit or to provide instructions or data to the processing unit. Software may be dispersed throughout computer systems connected via networks and may be stored or executed in a dispersion manner. Software and data may be recorded in one or more computer-readable storage media.

The methods according to the above-described example embodiments of the inventive concept may be implemented with program instructions which may be executed by computer or processor and may be recorded in computer-readable media. The media may also include, alone or in combination with the program instructions, data files, data structures, and the like. The program instructions recorded in the media may be designed and configured especially for the example embodiments of the inventive concept or be known and available to those skilled in computer software. Computer-readable media include magnetic media such as hard disks, floppy disks, and magnetic tape; optical media such as compact disc-read only memory (CD-ROM) disks and digital versatile discs (DVDs); magneto-optical media such as floptical disks; and hardware devices that are specially configured to store and perform program instructions, such as read-only memory (ROM), random access memory (RAM), flash memory, and the like. Program instructions include both machine codes, such as produced by a compiler, and higher level codes that may be executed by the computer using an interpreter. The described hardware devices may be configured to execute one or more software modules to perform the operations of the above-described example embodiments of the inventive concept, or vice versa.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" of "displaying" or the like, refer to the action and processes of a computer system, or similar electronic computing device/hardware, that manipulates and transforms data represented as physical, electronic quantities within the computer system's registers and memories into other data similarly represented as physical quantities within the computer system memories or registers or other such information storage, transmission or display devices.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present.

While only certain features of several embodiments have been illustrated and described herein, many modifications and changes will occur to those skilled in the art. It is, therefore, to be understood that the appended claims are intended to cover all such modifications and changes as fall within the true spirit of the invention.

## Claims

1. A model validation system, the model validation system comprising:
a memory having computer-readable instructions stored therein; and
a processor configured to:
enable a model validator to select a model for validation from an assigned set of models; wherein each model comprises a plurality of pre-defined attributes;
assist interactions between a model developer and the model validator by defining a set of questions related to the selected model;
identify a plurality of model risks for the selected model and design a validation work plan using a set of statistical tests; wherein the validation work plan factors the identified model risks; and wherein the model validator selects the set of statistical tests from a plurality of statistical tests stored in a code repository;
execute the set of selected statistical tests for the validation work plan to generate a set of validation results of the selected model; and
categorize the plurality of model risks into one or more categories;
wherein the categorization is performed based on the set of validation results obtained during the validation of the selected model.

2. The model validation system of claim 1, wherein the memory is further configured to store the validation results obtained during validation of the selected model.

3. The model validation system of claim 1, wherein the processor is configured to execute the computer-readable instructions to generate one or more reports comprising assessment parameters for the selected model, wherein the assessment parameters comprises the validation results obtained during validation of the selected model.

4. The model validation system of claim 1, wherein the pre-defined attributes associated to the model are defined by the model developer.

5. The model validation system of claim 1, wherein the processor is configured to execute the computer-readable instructions to enable the model validator to add a plurality of new questions related to each model and/or delete one or more pre-defined questions to a questionairre.

6. The model validation system of claim 5, wherein the set of pre-defined questions comprises a plurality of pre-defined questions associated with the selected model and further enabling the model validator to communicate with the model developer.

7. The model validation system of claim 5, wherein each set of added and/or deleted questions to the questionairre is stored as a new version.

8. The model validation system of claim 1, wherein the code repository comprises a workbench configured to enable the model validator to create, edit, execute or save the set of statistical tests from a plurality of statistical tests.

9. The model validation system of claim 1, wherein the processor is further configured to execute the computer-readable instructions to enable the model validator to use a customized validation work plan related to each model risk; wherein the customized validation work plan comprises executing a plurality of statistical tests for the selected model.

10. The model validation system of claim 1, wherein the processor is further configured to execute the computer-readable instructions to display historic work plan for each model.

11. The model validation system of claim 1, wherein the memory comprises a knowledge repository configured to enable the model validator to access a plurality of libraries; wherein the libraries comprises information related to the plurality of models; wherein the knowledge repository is in searchable format.

12. The model validation system of claim 1, wherein the processor is further configured to execute the computer-readable instructions to provide a plurality of levels of access to a corresponding plurality of roles.

13. The model validation system of claim 1, wherein the processor is further configured to execute the computer-readable instructions to facilitate monitoring for organization-wide model inventory at plurality of levels consisting of line of business, model families and models or combinations thereof.

14. The model validation system of claim 13, wherein the processor is further configured to execute the computer-readable instructions to provide status and assess severity of risks and monitor of risk resolution plans and their effectiveness.

15. The model validation system of claim 13, wherein the processor is further configured to execute the computer-readable instructions to provide a comprehensive summary of the validation of the selected model.

16. The model validation system of claim 1, wherein the processor is further configured to execute the computer-readable instructions to capture a communication between the model developers and/or model validators.

17. The model validation system of claim 1, wherein the memory is further configured to store data related to each model and status of model validation, memory is accessed by the model validator and/or a supervisor to view the data corresponding to each model and status of model validation.

18. The model validation system of claim 1, wherein the processor is further configured to execute the computer-readable instructions to monitor one or more assumptions of a developer's model to infer a health of the model; wherein the assumptions are parameters presumed to be true during life of the model.

19. A method for validating a model comprising:
enabling a model validator to select the model for validation from an assigned set of models; wherein each model comprises a plurality of pre-defined attributes;
assisting interactions between a model developer and the model validator with a set of questions related to the selected model;
identifying a plurality of model risks for the selected model and designing a validation work plan using a set of statistical tests; wherein the validation work plan factors the identified model risks; and wherein the model validator selects the set of statistical tests from a plurality of statistical tests;
executing the set of selected statistical tests for the validation work plan to generate a set of validation results of the selected model; and
categorizing the plurality of model risks into one or more categories; wherein the categorization is performed based on the set of validation results obtained during the validation of the selected model.

20. The method of claim 19, further comprising capturing a communication between the model developers and/or model validators.

21. The method of claim 19, further comprising enabling the model validator to access a plurality of libraries; wherein the libraries comprises information related to the plurality of models.

22. The method of claim 19, further comprising facilitating monitoring of organization-wide model inventory at plurality of levels consisting of line of business, model families and models or combinations thereof.
